Europäisches Patentamt

European Patent Office

Office européen des brevets

(11) Publication number: **0 417 908 A2**

# EUROPEAN PATENT APPLICATION

(21) Application number: 90308856.5

(22) Date of filing: **10.08.90**

(51) Int. Cl.⁵: **B01D 67/00**, B01D 69/04, B01D 71/52, B01D 71/68, C08J 9/26

(30) Priority: **15.09.89 GB 8920996**

(43) Date of publication of application:
**20.03.91 Bulletin 91/12**

(84) Designated Contracting States:
**AT BE CH DE DK ES FR GB GR IT LI LU NL SE**

(71) Applicant: IMPERIAL CHEMICAL INDUSTRIES PLC
Imperial Chemical House, 9 Millbank
London SW1P 3JF(GB)

(72) Inventor: **Birch, Robin David**
**19 Paul's Rise**
**Woodchester, Stroud, Gloucestershire(GB)**
Inventor: **Artus, Kevin James**
**10 Snow drop Close**
**Abbeymead, Gloucestershire GL4 7DZ(GB)**

(74) Representative: **Hulse, Raymond et al**
**Imperial Chemical Industries PLC Legal**
**Department: Patents PO Box 6 Bessemer**
**Road**
**Welwyn Garden City Hertfordshire AL7**
**1HD(GB)**

(54) Membrane.

(57) A method of producing a tubular membrane in which a blend of an aromatic polyetherketone (PEEK) and an aromatic polyethersulphone (PES), the blend being selected in a defined weight range, is extruded into a tube in which the polymers are present in the tube wall as interpenetrating networks and leaching out with a solvent for PES the PES network so producing a porous PEEK tube characterised in that the PEEK and PES used comply with a defined melt viscosity relationship.

EP 0 417 908 A2

# MEMBRANE

This invention relates to a membrane and more particularly to a tubular membrane having high porosity made from an aromatic polyetheretherketone.

European Patent Application No 88301982 (Imperial Chemical Industries PLC) is concerned with a method of producing a low density, porous, film or tape by melt spinning a blend of a thermoplastic polymer and another thermoplastic polymer into a film or tape and then leaching away the other polymer using a suitable solvent. The film produced, being highly porous, may be used for a variety of end uses including a filtration or separation medium.

United States Patent Serial No 4,755,540 (Raychem Limited) describes a method of making a polyaryletherketone porous membrane, comprising the steps of:

(a) providing a mixture of a first polymeric material, which is a polyaryletherketone, and a second polymeric material, which is partially incompatible with said first polymeric material;

(b) forming said mixture into a film; and

(c) extracting from said film at least a substantial portion of said second polymeric material by means of a liquid which does not dissolve said first polymeric material.

European Patent Application 246752 (Imperial Chemical Industries PLC) describes a melt spun tube having two polymeric fibrous components and containing from 30 to 70 parts by weight of a first component and from 70 to 30 parts by weight of a second component, each component being present in the tube wall as fibrils which are substantially aligned to the axis of the tube, the aligned fibrils being interconnected to each other in a random manner, the interconnections penetrating through the fibrils of the other component such that both components exist in the tube wall as interpenetrating networks. A feature of the tube is that one of the two interpenetrating networks forming the tube wall can be leached out of the tube wall by a suitable solvent so producing a highly porous tube having a wall comprising the other polymer network. Such a porous tube can be used to advantage in the construction of a membrane.

In United Kingdom Patent Application No. 8916440.4 we describe a method of producing a membrane having substantially uniform porosity in which a blend of a first thermoplastic polymer and a second, immiscible, thermoplastic polymer is extruded into a structure having the desired cross section in which the polymers are present in the wall of the structure as interpenetrating networks and leaching out with a solvent for the immiscible polymer that network formed by the immiscible polymer so producing a porous structure having a wall comprising the first polymer network characterised in that the said immiscible polymer has a lower viscosity than, or the same melt viscosity as, the first polymer.

We have now found that in order to produce a tubular membrane having an acceptable porosity from an aromatic polyetheretherketone by the method described in European Patent Application 246752, it is necessary that the melt viscosity of the first component (a polyetheretherketone) and the melt viscosity of the second component comply with a defined relationship.

According to the invention we provide a method of producing a tubular membrane in which a blend of a first thermoplastic polymer and a second immiscible thermoplastic polymer, which blend being selected in the range 70% by weight of the first polymer and 30% by weight of the second polymer to 30% by weight of the first polymer and 70% by weight of the second polymer, is extruded into a tube in which the polymers are present in the tube wall as interpenetrating networks and leaching out with a solvent for the second polymer that interpenetrat ink network formed by the second polymer so producing a porous tube wall comprising the other network characterised in that (1) the first polymer is an aromatic polyetherketone (2) the second polymer is an aromatic polyethersulphone and (3) at the upper end of the blend range, at which there is 70% of the first polymer, the first polymer has a greater melt viscosity than the Second polymer and at the lower end of blend range, at which there is 30% of the first polymer, the first polymer has a lower melt viscosity than the second polymer.

If the first and second polymers do not have melt viscosities which are in accord with the above defined relationship then either it is not possible to leach out the second polymer without the extruded tube losing its integrity or the tube, after the second polymer has been leached out, has an undesirably low porosity.

By the term "melt viscosity" which is used herein in relation to the first polymer and the second, immiscible, polymer we mean the melt viscosity of the polymer at the temperature of extrusion and during those shear conditions to which the polymer is subjected during extrusion through the die.

The invention will now be described with reference to the following examples in which a small screw extruder was used having a 22 mm diameter screw and length to diameter ratio of 22:1 in conjunction with a standard sand packed annular die.

EXAMPLE 1

A blend was formed from 70% by weight of polyetheretherketone (PEEK) grade 45°C having a melt viscosity of 2230 poise and 30% by weight of polyethersulphone (PES) grade 3600G having a melt viscosity of 1420 poise. A second blend was formed from 30% by weight PEEK 450G and 70% by weight of PES 3600G. Both of these polymers are available from ICI Advanced Materials.

Prior to blending, each polymer was dried under vacuum for a minimum of 12 hours at 110 degrees C. The dried polymers were gravity mixed prior to being added to the feed hopper of the extruder. The blends were extruded through an annular die at a shear rate of 1795 $S^{-1}$ and a throughput of 5 grams a minute and at a temperature of 380 degrees C. The annular die had a inner diameter of 2.2 mm and a gap of 0.18 mm. A nitrogen feed was supplied to the inside of the annular die at a rate commensurate with producing tubes with good wall concentricity and dimensional uniformity. The extruded tubes had an outer diameter of 2-3 mm and a wall thickness of 250 micrometres. The tubes were quenched using a conventional air quench.

Short lengths of tube from each blend were immersed in boiling dimethylformamide for two hours. Sample tubes which retained their integrity after leaching were then dried under vacuum at 95 degrees C for eight hours.

Sample tubes from the 70% PEEK and 30% PES blend were found to have lost 100% of the PES component to leave a highly porous integral tube. The solvent (dimethylformamide) remained clear during leaching.

Sample tubes from the 30% PEEK and 70% PES blend fell apart during leaching. A fine suspension of the PEEK component was present in the dimethylformamide.

EXAMPLE 2

A blend was formed between 30% PEEK grade 150G having a melt viscosity of 740 poise and 70% PES grade 4800G having a melt viscosity of 1750 poise. Both of these polymers are available from ICI Advanced Materials.

Prior to blending, each polymer was dried under vacuum for a minimum of 12 hours at 110 degrees C. The dried polymers were gravity mixed and fed to the feed hopper of the extruder. The blend of PEEK and PES was extruded through an annular die at a shear rate of 5384 $S^{-1}$ and a

throughput of 15 grams a minute and at a temperature of 380 degrees C. The annular die had an inner diameter of 2.2 mm and a gap of 0.18 mm. A nitrogen feed was supplied to the inside of the annular die at a rate commensurate with producing tubes with a good wall concentricity and dimensional uniformity. The extruded tubes had an outer diameter of 2-3 mm and a wall thickness of 250 micrometres. The tubes were quenched using a conventional air quench. Short lengths of tube from the PEEK/ PES blend were immersed in boiling dimethylformamide for two hours and then dried under vacuum at 95 degrees C for 8 hours. Sample tubes were found to have lost 100% of the PES component leaving a highly porous integral tube of PEEK.

EXAMPLE 3

A blend was formed between 60% by weight of PEEK grade 150G having a melt viscosity of 770 poise and 40% by weight of PES grade 4800G having a melt viscosity of 1860 poise. Both of these polymers are available from ICI Advanced Materials.

Each polymer was dried under vacuum for a minimum of 12 hours at 110 degrees C prior to being gravity mixed and fed to the feed hopper of the extruder. The blends were extruded through the annular die at a shear rate of 4666 $S^{-1}$ and a throughput of 13 grams a minute and at a temperature of 380 degrees C. The annular die had an inner diameter of 2.2 mm and a gap of 0.18 mm. A nitrogen feed was supplied to the inside of the annular die at a rate commensurate with producing tubes with good wall concentricity and dimensional uniformity. The extruded tubes had an outer diameter of 2-3 mm and a wall thickness of 250 micrometres. The tubes were quenched using a conventional air quench.

Short lengths of tube from each blend of PEEK and PES were immersed in boiling dimethylformamide for two hours and then dried under vacuum at 95 degrees C for eight hours.

Samples of tube from the blend of 60% PEEK and 40% PES were found to have lost only 4.5% of the PES component and consequently had insufficient porosity for the tube to be suitable for use as a membrane.

Samples of tube from the blend of 40% PEEK and 60% PES were found to have lost 87.3% of the PES component to leave a porous integral tube.

With reference to the above examples, it should be realised that a die having different dimensions and shape, ie non circular, could have been used. Furthermore, the dried polymers could have been mixed by some other technique for example using a Brabender mixer or with the aid of a twin extruder.

It should also be understood that the blends used could have included a compatibliser and/or a viscosity modifier; a compatibiliser serving to modify the miscibility of the blend and a viscosity modifier serving to lower melt viscosity of the blend and so reduce pressure on the extrusion pack.

## Claims

1. A method of producing a tubular membrane in which a blend of first thermoplastic polymer, which blend being selected in the range 70% by weight of the first polymer and 30% by weight of the second polymer to 30% by weight of the first polymer and 70% by weight of the second polymer, is extruded into a tube in which the polymers are present in the tube wall as interpenetrating networks and leaching out with a solvent for the second polymer so producing a porous tube wall comprising the other network characterised in that (1) the first polymer is an aromatic polyetherketone (2) the second polymer is an aromatic polyethersulphone and (3) at the upper end of the blend range, at which there is 70% of the first polymer, the first polymer has a greater melt viscosity than the second polymer and at the lower end of the blend range, at which there is 30% of the first polymer, the first polymer has a lower melt viscosity than the second polymer.

2. A tubular membrane produced by a method as claimed in Claim 1.